# FASCICULE DE BREVET EUROPEEN

(11) **EP 0 534 532 B1**
(45) Date de publication et mention de la délivrance du brevet: **13.12.1995**
(21) Numéro de dépôt: 92202836.0
(22) Date de dépôt: 16.09.1992
(51) Int. Cl.: G01V 3/02, G01V 3/38, H01L 41/04, H01L 41/16, G08G 1/065

(54) **Détecteur d'essieux pour installation en surface de chaussée à plusieurs voies**
Achsendetektor zur Anordnung in der Strassenoberfläche eines Multifahrspurweges
Axle detector built in the surface of a multi-lane road

(30) Priorité: 25.09.1991 FR 9111828
(43) Date de publication de la demande: 31.03.1993
(73) Titulaire: THERMOCOAX, F-92150 Suresnes (FR); Philips Electronics N.V., 5621 BA Eindhoven (NL)
(72) Inventeur: Bailleul, Gilles, Société Civile S.P.I.D., F-75008 Paris (FR); Coville, Patrick, Société Civile S.P.I.D., F-75008 Paris (FR)
(74) Mandataire: Landousy, Christian

(56) Documents cités:
- FR-A- 2 625 808
- US-A- 2 163 960
- US-A- 2 330 872
- US-A- 4 901 334

## Description

L'invention concerne un détecteur d'essieux pour installation en surface d'une chaussée à plusieurs voies, incluant au moins un câble coaxial piézoélectrique comprenant un conducteur central, une gaine métallique et un matériau de remplissage entre la gaine et le conducteur.

L'invention trouve son application au comptage de véhicules sur des routes ou autoroutes à plusieurs files, par exemple 5 ou plus.

Il est déjà connu de l'état de la technique trois catégories de détecteurs d'essieux.

La première catégorie est constituée par des détecteurs visuels qui ne sont pas fiables du fait que sur une route à plusieurs files, plusieurs véhicules peuvent passer de front et donc se cacher les uns les autres.

La seconde catégorie est constituée par des détecteurs simplement posés sur la chaussée. Dans cette catégorie, on trouve par exemple le dispositif décrit dans la demande de brevet FR 2 625 808, qui concerne un ruban de film piézoélectrique. Ce genre de dispositif a une durée de vie vraiment trop limitée du fait de la fragilité de la connexion entre le film piézoélectrique et le câble de raccordement au dispositif d'enregistrement que l'on dispose en général sur le bas-côté de la route. Dans cette catégorie, on trouve aussi des tubes pneumatiques, qui sont également fragiles, et qui d'autre part ne peuvent pas être actifs autrement que sur toute leur longueur, si bien que sur une route à plusieurs files, on ne peut distinguer la quantité de trafic qui affecte chacune des files séparément.

La troisième catégorie est constituée par des détecteurs enterrés dans la chaussée. Dans cette catégorie on trouve par exemple le dispositif décrit dans la demande de brevet FR 2 575 827, qui correspond au US-A-4 712 423. Ce dispositif connu comprend en référence avec la figure 3, dans une saignée pratiquée dans une chaussée, une couche d'accrochage sur les parois de la saignée, et, entre un capteur piézoélectrique et cette couche, une ou plusieurs résines enveloppant le capteur. Il comprend en outre un profilé métallique, autour du capteur piézoélectrique, noyé dans les matériaux de remplissage.

On notera que ce dernier dispositif utilise comme détecteur piézoélectrique un câble piézoélectrique conforme à celui qui est décrit dans le brevet FR 2 109 176.

Les dispositifs de la troisième catégorie ont en commun d'être résistants mécaniquement dans le temps. Donc ils peuvent être installés à demeure sur une route. Cependant, ceux qui utilisent des résines pour l'enrobage des capteurs piézoélectriques présentent des problèmes de tenue en température lorsque les conditions climatiques de la région où ils sont installés varient.

Si les dispositifs entrant dans la troisième catégorie semblent a priori les seuls à présenter des performances convenables, ils présentent néanmoins dans certains cas un grave inconvénient : leur mise en place dans la chaussée nécessite des travaux qui d'une part détériorent la route dans une certaine mesure et qui d'autre part sont longs à mettre en oeuvre.

Or, il se pose le problème d'équiper avec des détecteurs d'essieux, des autoroutes ou des routes ayant plusieurs files, par exemple 5 ou plus, ce qui est un cas très courant aux Etats-Unis d'Amérique.

L'augmentation du trafic routier dans le monde entier se traduit par la création d'autoroutes ou routes de plus en plus larges, avec un grand nombre de voies dans chaque sens, et par une demande de la part des Autorités responsables des transports routiers, d'une meilleure connaissance du trafic ; ceci aussi bien pour la conception de la chaussée, pour l'amélioration de la fluidité du trafic, que pour la réalisation de péages automatiques.

Ainsi, lorsqu'une autoroute est très chargée en trafic, et a de nombreuses voies, il est pratiquement exclu de pouvoir la fermer à la circulation pendant le temps assez long nécessaire à l'installation de capteurs interrés de la troisième catégorie citée, et ceci d'autant plus que, bien souvent, seulement une étude ponctuelle du trafic est suffisante pour rassembler les données nécessaires à l'évaluation ou à une meilleure connaissance du trafic. On doit donc recourir à un détecteur placé à la surface de la route.

Un détecteur à disposer en surface de la route est aussi connu par la demande de brevet FR 2 575 827, en référence avec sa figure 4. Ce dispositif comprend un boîtier plat, d'épaisseur 1 cm, ayant des rampes d'accès en biseau, incluant un câble piézoélectrique comme celui qui est décrit dans le même document pour le capteur enterré, disposé dans une gorge de ce boîtier et maintenu par un matériau d'enrobage.

Le câble ou détecteur piézoélectrique connu du brevet FR 2 109 176 et utilisé dans la demande de brevet FR 2 575 827 aussi bien enterré qu'en surface, comprend une gaine et un conducteur central en titane, et un matériau de remplissage piézoélectrique qui est un mélange de titanate et de zirconate de plomb, ou bien du titanate de baryum dopé au titanate de plomb, et qui est compacté entre la gaine et le conducteur central.

Néanmoins, aucun des dispositifs connus ne résoud le problème posé par la mise en oeuvre d'un détecteur d'essieux à disposer d'une manière simple à la surface d'une chaussée à plusieurs voies impliquant une installation extrêmement rapide, qui est spécialement appropriée à fournir des donnnées différentiées pour chacune des voies de cette chaussée supposée lourdement chargée en trafic routier, même si ces propriétés ont comme contrepartie que cette installation est temporaire, du fait que le dispositif a une durée de vie relativement courte, en raison de la charge du trafic, à condition que cette durée de voie soit néanmoins suffisamment longue pour permettre de collecter les données recherchées.

Un problème technique que se propose de résoudre l'invention est donc de fournir un détecteur d'essieux pour installation éventuellement temporaire,
- à poser en surface d'une chaussée à plusieurs voies,
- facile à fixer à l'emplacement choisi,
- perturbant le trafic ausi peu que possible lors de son installation, et ne le perturbant aucunement lors de son utilisation,
- ayant une durée de vie suffisant à collecter les données voulues, par exemple 1 semaine en trafic lourdement chargé,
- fournissant des données sélectives propres à chacune des voies de la chaussée, avec aussi peu d'interférences que possible avec les données considétées comme parasites provenant des autes voies,
- facile à raccorder à un dispositf d'enregistrement disposé sur le bas-côté de la chaussée, au moyen d'un dispositif de connexion mécaniquement aussi résistant dans le temps que le détecteur d'eessieux lui-même,
- ce détecteur excluant tout connecteur dans la partie exposée au trafic,
- ce détecteur ayant donc des parties aptes à être disposées sélectivement sur chacune des voies à étudier,
- ce détecteur étant par exemple apte à effectuer des mesures sur des chaussées aussi larges que 5 à 10 voies,
- ce détecteur étant en outre résistant aux conditions climatiques difficiles (très fortes ou faibles températures, variations brutales de températures, pluie, neige, verglas, etc...).

Le câble connu du brevet FR 2 109 176 ne convient pas pour résoudre ce problème.

En effet, il est connu de l'homme du métier que le matériau piézoélectrique "de remplissage" est composé de particules ou de domaines piézoélectriques qui, lorsque le matériau est "brut" sont réparties de manière aléatoire. Le matériau brut est donc isotrope : chaque domaine piézoélectrique a son orientation propre, si bien que la somme des charges qui peuvent y être créées est très faible. Le matériau ne montre réellement un effet piézoélectrique utilisable que si les domaines sont orientés dans une direction privilégiée. Ceci est effectué, lors de la réalisation du câble piézoélectrique, en appliquant un champ électrique intense au matériau tout en le portant à une température proche du point de Curie. Un tel procédé de fabrication est particulièrement décrit dans ledit brevet FR 2 109 176 déjà cité.

Ainsi au moyen de ce câble il peut être obtenu un capteur suffisamment long, par exemple 20 m, pour traverser une chaussée à 5 files, mais ce câble ne fournit pas d'informations différentiées sur le trafic relatif à chacune des voies traversées.

D'autre part, un tel câble piézoélectrique a des inconvénients annexes graves. En effet, les câbles piézoélectriques sont très capacitifs, par exemple ils ont une capacité de l'ordre de 10 000 pF/m. Un capteur de 20 m de long réalisé au moyen d'un tel câble représenterait une capacité de 0,2 »F. Une capacité de cet ordre de grandeur est un inconvénient aussi bien si le signal collecté est traité par un amplificateur de charge, car 0,2 »F est trop important comme impédance de source, que si le signal est traité par un amplificateur de tension car la capacité abaisse la tension générée par le capteur dans un rapport qui peut être supérieur à 5 pour un capteur de 20 m.

Selon l'invention, on apporte une solution à l'ensemble de ces problèmes au moyen d'un détecteur tel que défini dans le préambule de la revendication 1, et en outre caractérisé en se qu'il comprend au moins une région dite active où le matériau de remplissage est piézoélectrique et au moins une région adjacente dite neutre où le matériau de remplissage n'est ni non-potentiellement piézoélectrique ni piézoélectrique.

Dans une mise en oeuvre de l'invention, la gaine est en cuivre, le conducteur central est en cuivre, le matériau de remplissage piézoélectrique est une céramique piézoélectrique et le matériau de remplissage non-potentiellement piézoélectrique est un isolant minéral en poudre.

Dans une mise en oeuvre préférentielle, la céramique piézoélectrique est choisie parmi un mélange de titanate et de zirconate de plomb, ou du titanate de baryum dopé au titanate de plomb, et l'isolant minéral en poudre est choisi parmi la magnésie (MgO), la silice (SiO₂) ou l'alumine (Al₂O₃) ou un mélange de plusieurs isolants minéraux comprenant entre autres l'une de ces poudres.

L'invention est décrite ci-après en détail en référence avec les figures schématiques annexées dont :
- la figure 1 représente un câble piézoélectrique en coupe transversale,
- la figure 2 représente un câble piézoélectrique en coupe longitudinale,
- la figure 3 représente un détecteur pour chaussée à plusieurs voies,
- la figure 4 représente, vu de dessus, un côté d'une autoroute à 5 files dans une direction de la circulation, entre le terre-plein central et le bas-côté.
- la figure 5 montre en coupe transversale une structure coaxiale fixée sur une chaussée par une bande adhésive après son enrobage dans un profilé ou un tube élastique,
- la figure 6 montre en coupe transversale la structure coaxiale simplement fixée sur une chaussée par une bande adhésive.

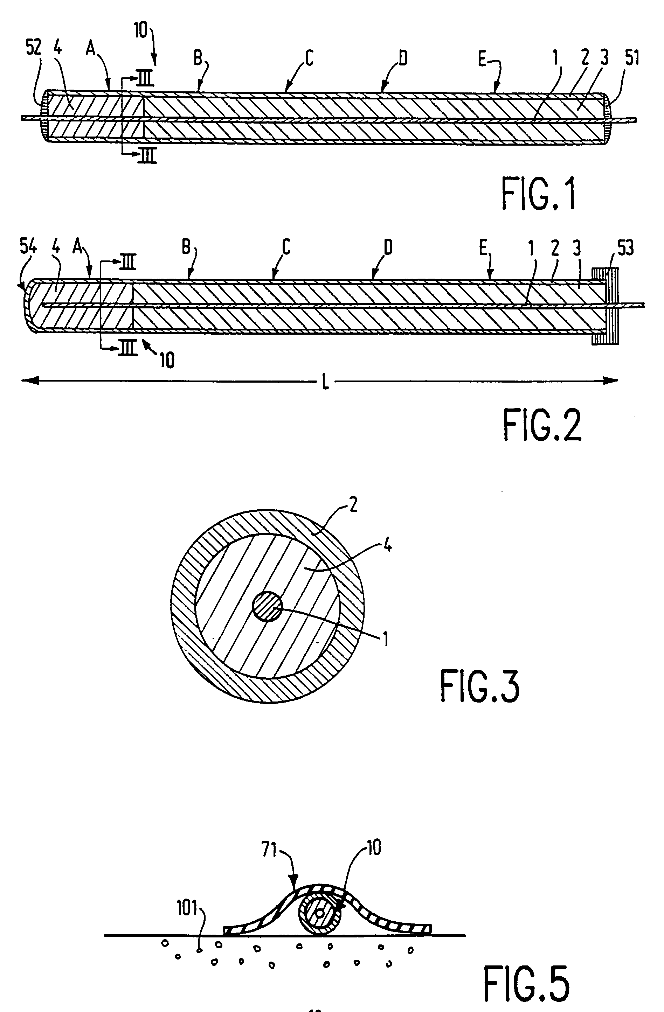

Tel que représenté en coupe longitudinale sur les figures 1 et 2 et en coupe transversale sur la figure 3, le dispositif détecteur d'essieux 10, comprend essentiellement une structure coaxiale formée d'un conducteur central 1, d'une gaine métallique 2 et d'un matériau pulvérulant de remplissage 3, 4 disposé entre le conducteur central 1 et la gaine 2.

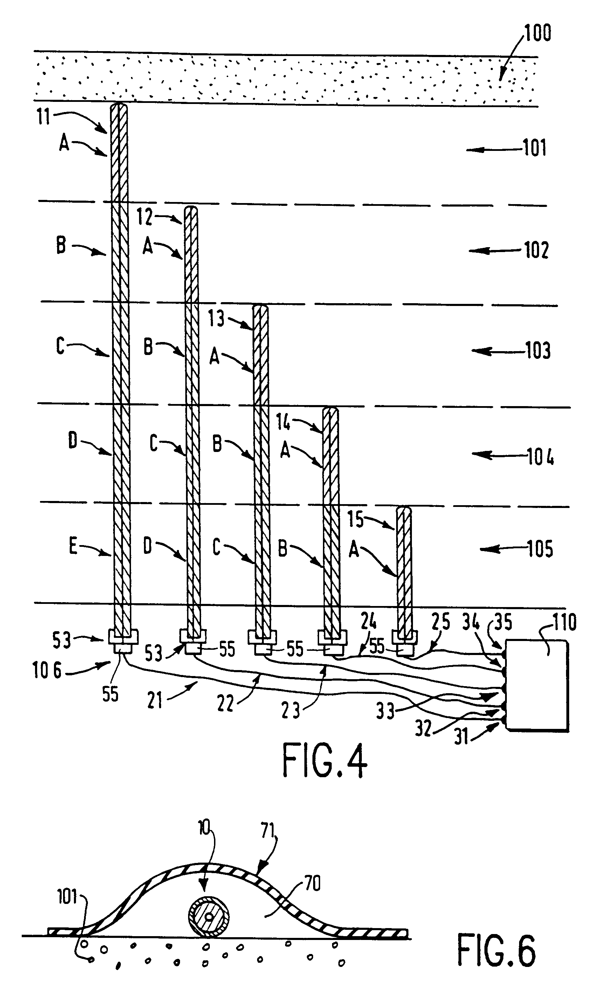

La structure coaxiale est réalisée d'une longueur L suffisante pour couvrir une ou plusieurs voies d'une chaussée à voies multiples, par exemple pour être utilisée sur une autoroute ayant entre 2 et 10 files. Ainsi la figure 4 représente, vu de dessus, un côté d'une autoroute à 5 files dans une direction de la circulation, entre le terre-plein central 100 et le bas-côté 106.

Sur les figures 1 et 2, on a représenté schématiquement respectivement deux mises en oeuvre de la structure coaxiale 10 appropriée à la détection de véhicules circulant sur la cinquième file 101 comptée à partir du bas-côté de l'autoroute, étant supposé que le dispositif électronique d'enregistrement 110 des données recueillies est placé à l'abri du trafic routier, sur ce bas-côté 106 d'autoroute comme montré sur la figure 4. Dans une autre utilisation du détecteur d'essieux, le dispositif électronique d'enregistrement 110 des données pourrait être placé au contraire sur le terre-plein central 100.

Donc en référence avec les figures 1 et 2, la structure coaxiale 10 présente une longueur L capable de couvrir les 5 files d'autoroute, c'est-à-dire environ 20 m. Les parties A, B, C, D, E de la structure coaxiale correspondront, après l'installation du détecteur d'essieux en travers de l'autoroute, respectivement aux files 101, 102, 103, 104 et 105 représentées schématiquement sur la figure 4.

Pour la détection d'essieux sur la cinquième file 101, seule la partie A de la structure coaxiale 10 doit être capable d'effet piézoélectrique et cet effet piézoélectrique doit être radial, c'est-à-dire selon le rayon du dispositif représenté en coupe sur la figure 3. Les autres parties B, C, D etc., disposées entre la file sur laquelle on effectue les mesures et le bas-côté 106 de l'autoroute, doivent être neutres, et en particulier ne doivent pas émettre de signaux parasites provenant du passage des véhicules sur les files 102 et 103, etc.

C'est pourquoi, lors de la réalisation de la structure coaxiale 10, seule la partie A est dotée d'un matériau de remplissage 4 potentiellement piézoélectrique. Les autres parties B, C, D, etc. sont dotées d'un matériau de remplissage 3 complètement neutre.

Le procédé de réalisation de la structure coaxiale 10 comprend la formation d'une ébauche du câble dont le diamètre peut être de 0,5 à 3 cm. L'ébauche comprend la gaine métallique 3, le conducteur central 1 et les matériaux pulvérulents de remplissage 3 et 4 répartis sur la longueur de l'ébauche dans les proportions d'une partie correspondant à A pour le matériau potentiellement piézoélectrique et quatre parties correspondant à B, C, D, E pour le matériau neutre.

L'ébauche est ensuite soumise à des opérations de tréfilage et laminage avec des recuits pour l'amener au diamètre et à la longueur définitifs appropriés à former la structure coaxiale pour le détecteur d'essieux. Ce faisant, les poudres sont rendues compactes dans les différentes parties du câble. Le diamètre définitif est compris entre 1 et 3 mm, et la longueur dans le cas pris comme exemple de câble pour 5 voies est de l'ordre de 20 m.

Tel que représenté en coupe longitudinale sur la figure 1, chacune des extrémités 51, 52 est scellée avec un bouchon isolant étanche en laissant dépasser une partie du conducteur central 1.

Tel que représenté en coupe longitudinale sur la figure 2, à l'une des extrémités 54, la gaine 2 est complètement fermée, sans contact avec le conducteur central 1 et à l'autre extrémité est disposé un bouchon isolant étanche 53, laissant sortir une partie du conducteur central 1.

Dans l'un et l'autre cas, une des extrémités où le conducteur central est disponible est munie d'une prise de raccordement coaxial qui peut être par exemple du type BNC. De préférence la structure coaxiale destinée à réaliser le détecteur d'essieux est raccordée par cette prise à un câble de transmission, représenté par les références 21, 22, 23, 24 et 25 sur la figure 4 et qui est commercialement disponible chez THERMOCOAX (Suresnes-FRance) sous la référence RG58 Cu.

Différents exemples de produits pour réaliser les différentes parties de la structure coaxiale sont donnés ci-après.

### EXEMPLE I

Le conducteur central peut être en cuivre ainsi que la gaine conductrice externe. La partie A potentiellement piézoélectrique peut contenir le matériau pulvérulent de remplissage choisi parmi les céramiques piézoélectriques déjà commercialisées, par exemple le PEX₅ de PHILIPS (Pays-Bas), à partir duquel on obtient une poudre du mélange de titanate et zirconate de plomb ayant un point de Curie à 285°C. Les parties neutres sont favorablement emplies par un isolant minéral pulvérulent choisi parmi la magnésie MgO, la silice SiO₂, l'alumine Al₂O₃.

### EXEMPLE II

Le conducteur central peut être en cuivre ainsi que la gaine conductrice externe. Le matériau de remplissage potentiellement piézoélectrique de la partie A active peut être choisi parmi :
- un mélange de titanate et de zirconate de plomb ou de baryum,
- du titanate de baryum dopé avec quelques % de titanate de plomb par exemple 5 %.

Si le matériau potentiellement piézoélectrique ne contenait qu'un seul titanate, il serait plus facilement dépolarisé, après sa polarisation.

### EXEMPLE III

Le conducteur central et la gaine métallique peuvent être constitués d'autres métaux que le cuivre, par exemple le titane. Mais le titane est coûteux devant le cuivre. C'est pourquoi on cherchera plutôt un métal bon marché, du fait que le détecteur selon l'invention est plutôt prévu pour un usage temporaire c'est-à-dire non réutilisable après les quelques jours ou environ une semaine d'installation dans un site donné.

### EXEMPLE IV

On peut aussi utiliser avec le conducteur et la gaine en un des métaux des exemples précédents, des matériaux de remplissage choisis parmi les polymères. Ainsi pour la partie A potentiellement piézoélectrique on pourra choisir le matériau de remplissage parmi les PVDF qui sont des fluoropolymères disponibles commercialement chez ATOCHEM (Elf-Aquitaine Etats-Unis). Pour les partie neutres B, C, D etc. on choisira alors par exemple un polyéthylène.

Lorsque l'ébauche a fini d'être traitée mécaniquement et thermiquement pour fournir la structure coaxiale voulue pour l'application au détecteur d'essieux, on la soumet à l'opération de polarisation de la partie potentiellement piézoélectrique. Cette opération consiste à appliquer un champ électrique élevé à la structure coaxiale, en même temps que cette dernière est portée à une température voisine du point de Curie du matériau piézoélectrique. Pour l'application à la détection d'essieux, la polarisation doit être radiale.

A cet effet, on applique une tension continue d'intensité appropriée entre la gaine et le conducteur central.

Pour la mise en oeuvre des différentes opérations menant de l'ébauche à la structure coaxiale piézoélectrique opérationnelle, l'homme du métier peut se rapporter à l'enseignement du brevet FR 2 109 176.

C'est à ce stade que se révèle l'importance de différencier le matériau de remplissage 4 de la partie active montrant l'effet piézoélectrique, et le matériau de remplissage complètement neutre 3 des autres parties B, C, D etc...

En effet, si la structure coaxiale était emplie sur son entière longueur, c'est-à-dire sur toutes les parties aussi bien A que B, C, D, etc. de matériau potoentiellement piézoélectrique, et si, lors de la fabrication seulement la partie A voulue active était soumise au processus de polarisation, alors le câble présenterait au moins les inconvénients suivants.

D'une part, une très forte capacité, très néfaste au traitement du signal recueilli par un système 110 (voir figure 4) incluant un amplificateur de signal tel que connu de l'homme du métier pour recueillir les informations relatives au trafic routier.

D'autre part, les parties B, C, D etc. que l'on veut neutres seraient très légèrement sensibles bien que n'ayant pas subi le processus de polarisation. Dans ce cas il serait très difficile de faire la différence entre un signal parasite et un signal atténué. On entend par signal atténué un signal créé par un véhicule léger dans la partie active A, et par signal parasite, un signal créé par un lourd camion dans une des parties neutres B, C, D etc.

La figure 4 montre vu du dessus schématiquement l'ensemble des éléments d'un détecteur pour autoroute à 5 voies.

Ce détecteur comprend une première structure coaxiale 11, telle que décrite selon la référence 10 des figures 1, 2 et 3, ayant par exemple une partie active A d'environ 3,5 m pour appliquer en travers de la file 101 la plus éloignée du bas-côté 106, et ayant des parties neutres B, C, D, E, d'environ 3,5 m chacune pour appliquer en travers des files 102, 103, 104, 105. Un câble coaxial de connexion référencé 21, relié à l'extrémité 53 par un connecteur coaxial non représenté, transporte les signaux relatifs à la partie active A vers une entrée 31 d'un dispositif de traitement électronique 110. Le connecteur, le câble de connexion 21, et le dispositif électronique 110 sont disposés à l'abri de la circulation sur le bas-côté 106.

Evidemment dans une autre application, le dispositif 110 pourraît être disposé sur le terre-plein central 100 de l'autoroute concernée et dans ce cas la structure coaxiale 11 serait disposée tête-bêche.

Le détecteur comprend ensuite une structure coaxiale 12 du même type que la structure 10 décrite précédemment, ayant une partie active A disposée en travers de la quatrième voie à partir du bas-côté dans cet exemple, et ayant seulement trois parties neutres B, C, D à cheval sur les voies 103, 104, 105. Un raccordement 22 analogue à ce qui a été décrit précédemment relie l'extrémité 53 de la structure 12 à l'entrée 32 du dispositif 110.

Le détecteur comprend encore des structures respectivement 13, 14, 15 ayant chacune une partie active A, et respectivement, deux parties neutres B, C ; une partie neutre B, et pas de partie neutre ; et ayant chacune un câble de connexion respectivement 23, 24, 25 pour les relier aux entrées 33, 34, 35 du dispositif 110.

Les parties neutres externes, c'est-à-dire respectivement E, D, C, B des structures 11, 12, 13, 14 prévues pour traverser la file 105, peuvent être plus longues que celles qui sont prévues pour traverser les autres parties, de manière à permettre la disposition de l'extrémité 53 bien en dehors de la circulation sur le bas-côté. Egalement la structure 15 qui ne comprend théoriquement qu'une partie active A, peut comprendre une partie neutre entre la partie A et l'extrémité 53 pour cette même raison.

Les câbles coaxiaux d'extension 21, 22, 23, 24, 25 peuvent avoir une longueur atteignant 20 m.

Les avantages procurés par un détecteur composé des éléments décrits précédemment sont les suivants :
a) Les structures coaxiales 11, 12, 13, 14, 15 présentent des capacités gênantes aussi faibles que possible : les parties neutres ne dépassent pas les valeurs de 300 pF/m avec la magnésie et 100 pF/m avec le polyéthylène. Cette diminution de la capacité représente une amélioration considérable par rapport au cas où l'on utilserait une structure comprenant sur toute sa longueur du matériau potentiellement piézoélectrique qui résulte en une capacité de 10 000 pF/m.
b) Les signaux transmis, relatifs à chaque voie 101, 102, 103, 104, 105 ne sont pas affectés par la circulation sur les autres voies, du fait des parties ayant comme matériau de remplissage des produits complètement neutres.
c) Toutes les connexions sont à l'abri de la circulation sur la bas-côté ou le terre-plein central ; il n'y a pas de connecteur sur la chaussée.
d) Le détecteur peut s'appliquer à toute autoroute quel que soit le nombre de voies. Il suffit de réaliser, outre la partie active A, la longueur adéquate de parties neutres B, C, D, etc. On a déjà testé des structures pour des autoroutes à 10 files.
e) Chaque partie, active ou neutre, peut être prévue de la longueur appropriée à l'application choisie, les autoroutes à équiper pouvant avoir des voies plus ou moins larges, notamment à l'emplacement des péages.
f) Chaque structure peut être fixée sur la chaussée très rapidement, en interrompant la circulation pendant un minimum de temps.
g) Les structures coaxiales 11, 12, 13 etc ont été testées sur autoroutes très chargées en circulation. Elles ont une durée de vie de l'ordre de 1 semaine en moyenne, ce qui est en général suffisant pour réaliser une étude du trafic. Elles peuvent avoir une durée de vie beaucoup plus longue dans un trafic plus léger ou moins rapide.
h) Les structures coaxiales sont très bon marché. Donc elles peuvent être considérées comme temporaires, à une seule utilisation, ou jetables.

On donne ci-après à titre d'exemple deux procédés de fixation des structures 11, 12, 13 etc en travers de chaussée, dans cette optique de détecteur d'essieux bon marché et à utilisation de courte durée, ou jetables.

La figure 6 montre en coupe transversale la structure coaxiale 10, sous-entendu pouvant prendre les formes 11, 12, 13 etc simplement posée sur une chaussée par exemple, sur la partie 101, et fixée par une bande adhésive 71, par exemple choisie par les bandes adhésives à base de polymères spéciales pour chaussée. La bande est disposée de préférence sur toute la longueur L de la structure coaxiale 10.

La figure 5 montre en coupe transversale une structure coaxiale 10 d'abord enfilée dans un profilé 70 ou dans un tube en matériau synthétique élastique n'oblitérant pas les vibrations radiales à transmettre à la structure 10. Le profilé 70 est de préférence appliqué à toute la longueur L de la structure 10, et l'ensemble est maintenu sur la chaussée par une bande adhésive 71.

En dehors de ces deux exemples de fixation, les structures 10 peuvent être simplement collées sur la route par exemple au moyen de résines polymérisant très rapidement à température ambiante. En effet, on rappelle que les structures 10 ont un diamètre très faible, inférieur ou égal à 3 mm ; elles sont donc faciles à fixer.

Le temps de vie du détecteur sur la route dépend en grande partie du principe adopté pour la fixation. Il est parfois recherché de rendre les structures 10 les moins visibles possible pour éviter les sabotages. Dans ce cas le procédé illustré par la figure 6 semble le plus approprié.

Il est évident que l'on peut aussi, pour une durée de vie plus longue, enterrer les structures 10. Elles n'auront pas alors l'avantage de la pose rapide mais garderont les autres qualités énumérées aux points a) à e).

Avec les structures selon l'invention, on peut réaliser également toutes autres applications, telles que le pesage des véhicules par exemple.

## Revendications

1. Détecteur d'essieux pour installation en surface d'une chaussée à plusieurs voies, incluant au moins un câble coaxial piézoélectrique (1, 2, 3, 4) comprenant un conducteur central (1), une gaine métallique (2) et un matériau de remplissage (3, 4) entre la gaine (2) et le conducteur (1), caractérisé en ce que le câble coaxial piézoélectrique (1, 2, 3, 4) a au moins une région dite active où le matériau de remplissage est piézoélectrique (3), et a au moins une région adjacente dite neutre où le matériau de remplissage n'est ni piézoélectrique ni potentiellement piézoélectrique (4).

2. Detecteur selon la revendication 1, caractérisé en ce que pour surveiller la Mième voie d'une chaussée à N voies, avec 1≦M≦N, il inclut un câble coaxial ayant une région active (A) dont la longueur a la dimension transversale de la voie à surveiller, et ayant une région neutre (B-E) adjacente dont la longueur a au moins la dimension transversale totale des M-1 autres voies restantes.

3. Détecteur selon la revendication 1, caractérisé en ce que pour surveiller chacune des N voies d'une chaussée, il inclut N câbles (11-15) coaxiaux selon la revendication 2, chacun des câbles étant défini par un paramètre M différent, 1≦M≦N.

4. Détecteur selon l'une des revendications 1 à 3, caractérisé en ce que le/s câble/s a/ont en outre à une de ses/leurs extrémités une partie neutre qui est munie d'un système de connexion coaxial, pour relier le détecteur à un dispositif de traitement (110) des données.

5. Détecteur selon la revendication 4, caractérisé en ce que le système de connexion (21-25) comprend un connecteur coaxial et un câble de raccordement coaxial au dispositif de traitement (110) des données.

6. Détecteur selon l'une des revendications précédentes, caractérisé en ce que dans le/s câble/s coaxial/aux piézoélectrique/s, le matériau de remplissage de la région active est une céramique piézoélectrique en poudre, et le matériau de remplissage de la région neutre adjacente ou d'extrémité est un isolant minéral en poudre.

7. Détecteur selon la revendication 6, caractérisé en ce que la céramique piézoélectrique en poudre est choisie entre un mélange de titanate et zirconate de plomb ou bien du titanate de baryum dopé au titanate de plomb, et en ce que l'isolant minéral en poudre est choisi entre la magnésie, MgO, ou bien la silice (SiO₂) ou bien l'alumine, Al₂O₃ ou bien un mélange de plusieurs isolants minéraux comprenant entre autres l'une de ces poudres.

8. Utilisation d'un détecteur selon l'une des revendications 2 ou 4 à 7 dans la mesure où ces dernières dépendent de la revendication 2, pour surveiller sélectivement la Mième voie d'une chaussée à N voies.

9. Utilisation d'un détecteur selon l'une des revendications 3 ou 4 à 7, dans la mesure où ces dernières dépendent de la revendication 3, pour surveiller toutes les voies d'une chaussée à N voies.

10. Utilisation d'un détecteur selon l'une des revendications 8 ou 9, caractérisé en ce que ce détecteur est relié à un dispositif de traitement (110) de données disposé sur le bas-côté de la route ou bien sur le terre-plein central par un système de connexion raccordé à l'extrémité de la partie neutre du ou des câbles coaxiaux piézoélectriques, en ce que le ou les câbles sont disposés en travers de la chaussée à sa surface, en ce que pour chaque câble la partie active (A) couvre une voie et la partie neutre (B-E) les autres voies entre la partie active et la zone dépourvue de trafic routier où est installé le dispositif de traitement de donnée, et en ce que le système de connexion entre le ou les câbles coaxiaux piézoélectriques et le dispositif de traitement (110) de données est également installé dans cette zone dépourvue de trafic routier.

## Patentansprüche

1. Achsdetektor auf einer Oberfläche einer Fahrbahn mit mehreren Spuren, mit wenigstens einem piezoelektrischen Koaxialkabel (1, 2, 3, 4) mit einem Zentralleiter (1) einer Metallummantelung (2) und einem Füllmittel (3, 4) zwischen der Ummantelung (2) und dem Leiter (1), dadurch gekennzeichnet, daß das piezoelektrische Koaxialkabel (1, 2, 3, 4) wenigstens ein mit aktiv bezeichnetes Gebiet hat, in dem das Füllmittel piezoelektrisch (3) ist, und wenigstens ein mit neutral bezeichnetes Nachbargebiet hat, in dem das Füllmittel weder piezoelektrisch noch potentiell piezoelektrisch (4) ist.

2. Detektor nach Anspruch 1, dadurch gekennzeichnet, daß zum Überwachen der M. Spur einer Fahrbahn mit N Spuren, wobei 1 ≦ M ≦ N ist, der Detektor ein Koaxialkabel aufweist mit einem aktiven Gebiet (A), dessen Länge der Querabmessung der zu überwachenden Spur entspricht, sowie mit einem angrenzenden neutralen Gebiet (B-E), dessen Länge der gesamten Querabmessung der restlichen M-1 anderen Spuren wenigstens entspricht.

3. Detektor nach Anspruch 1, dadurch gekennzeichnet, daß zum Überwachen jeder der N Spuren einer Fahrbahn der Detektor N Koaxialkabel (11-15) nach Anspruch 2 enthält, wobei jedes der Kabel durch ein abweichendes Parameter M definiert wird, worin 1 ≦ M ≦ N ist.

4. Detektor nach einem der Ansprüche 1 bis 3, dadurch gekennzeichnet, daß das Kabel (die Kabel) außerdem an einem seiner (ihrer) Enden einen neutralen Abschnitt hat (haben), der mit einem Koaxialverbindungssystem versehen ist, um den Detektor mit einem Datenverarbeitungsanordnung (110) zu verbinden.

5. Detektor nach Anspruch 4, dadurch gekennzeichnet, daß das Verbindungssystem (21-25) einen Koaxialverbinder und ein Koaxialanschlußkabel nach der Datenverarbeitungsanordnung (110) enthält.

6. Detektor nach einem oder mehreren der vorangehenden Ansprüche, dadurch gekennzeichnet, daß im (in den) piezoelektrischen Koaxialkabel das Füllmaterial des aktiven Gebiets eine pulverartige piezoelektrische Keramik ist, und daß das Füllmittel des neutralen Nachbargebiets oder des Endes ein pulverartiges mineralisches Isoliermittel ist.

7. Detektor nach Anspruch 6, dadurch gekennzeichnet, daß die piezoelektrische pulverartige Keramik aus einer Mischung von Titanat und Bleizirkonat oder auch aus mit Bleititanat dotiertem Bariumtitanat gewählt ist, und daß das pulverartige mineralische Isoliermittel aus Magnesium MgO, Silizium (SiO₂) oder auch Aluminium Al₂O₃ oder aus einer Mischung mehrerer mineralischer Isoliermittel gewählt wird, die unter anderen eines dieser Pulver enthält.

8. Anwendung eines Detektors nach einem der Ansprüche 2 oder 4 bis 7, je nachdem diese letzten Ansprüche von dem Anspruch 2 aghängig sind, zum selektiven Überwachen der M. Spur einer Fahrbahn mit N Spuren.

9. Anwendung eines Detektors nach einem der Ansprüche 3 oder 4 bis 7, je nachdem diese letzten vom Anspruch 3 abhängig sind, zur Überwachung aller Spuren einer Fahrbahn mit N Spuren.

10. Anwendung eines Detektors nach einem der Ansprüche 8 oder 9, dadurch gekennzeichnet, daß dieser Detektor mit einer Datenverarbeitungsanordnung (110) am Straßenrand der Fahrbahn oder auch im Mittelstreifen über ein Verbindungssystem nach dem Ende des neutralen Abschnitts des oder der piezoelektrischen Koaxialkabel verbunden ist, daß das Kabel oder die Kabel quer über die Fahrbahn an der Oberfläche angebracht sind, daß für jedes Kabel der aktive Abschnitt (A) eine Spur und der neutrale Abschnitt (B-E) die anderen Spuren zwischen dem aktiven Abschnitt und der verkehrsfreien Zone überquert, auf der die Datenverarbeitungsanordnung aufgestellt wird, und daß das Verbindungssystem zwischen dem oder den piezoelektrischen Koaxialkabel(n) und der Datenverarbeitungsanordnung (110) ebenfalls in diese verkehsfreie Zone aufgestellt wird.

## Claims

1. An axle detector for installation on the surface of a multi-lane road, including at least a piezoelectric coaxial cable (1, 2, 3, 4) which comprises a central conductor (1), a metallic cladding (2) and a filler material (3, 4) between the cladding (2) and the conductor (1), characterized in that the piezoelectric coaxial cable (1, 2, 3, 4) comprises at least one region which is referred to as the active region in which the filler material (3) is of a piezoelectric type, and at least one adjoining region which is referred to as the neutral region and in which the filler material (4) is neither piezoelectric nor potentially piezoelectric.

2. A detector as claimed in Claim 1, characterized in that for the monitoring of the M^{th} lane of an N-lane road, where 1 ≦ M ≦ N, the detector comprises a coaxial cable having an active region (A) whose length equals the transverse dimension of the lane to be monitored, and also comprises an adjoining neutral region (B-E) whose length at least equals the overall transverse dimension of the remaining M-1 other lanes.

3. A detector as claimed in Claim 1, characterized in that for the monitoring of each of the N lanes of a road, it comprises N coaxial cables (11-15) as claimed in Claim 2, each of said cables being defined by a different parameter M, where 1 ≦ M ≦ N.

4. A detector as claimed in any one of the Claims 1 to 3, characterized in that the cable (cables) also has (have) a neutral part at one of its (their) ends, which neutral part comprises a coaxial connection system for connecting the detector to a data processing device (110).

5. A detector as claimed in Claim 4, characterized in that the connection system (21-25) comprises a coaxial connector and a coaxial cable for connection to the data processing device (110).

6. A detector as claimed in any one of the preceding Claims, characterized in that in the piezoelectric coaxial cable (cables) the filler material of the active region is formed by a powdery piezoelectric ceramic material, the filler material of the adjoining neutral region or of the end being a powdery insulating mineral.

7. A detector as claimed in Claim 6, characterized in that the powdery piezoelectric ceramic material is chosen from a mixture of titanate and lead zirconate or barium titanate doped with lead titanate, and in that the powdery insulating mineral is chosen from magnesium (MgO) or silicon (SiO₂) or alumina (Al₂O₃) or a mixture of several insulating minerals containing inter alia one of these powders.

8. The use of a detector as claimed in any one of the Claims 2 or 4 to 7 in as far as the latter are dependent on Claim 2, for selectively monitoring the M^{th} lane of an N-lane road.

9. The use of a detector as claimed in any one of the Claims 3 or 4 to 7, in as far as the latter are dependent on Claim 3, for monitoring all lanes of an N-lane road.

10. The use of a detector as claimed in any one of the Claims 8 or 9, characterized in that the detector is connected to a data processing device (110), arranged on the shoulder of the road or on the central reservation, by way of a connection system connected to the end of the neutral part of the piezoelectric coaxial cable (cables), in that the cable (cables) is (are) arranged across the surface of the road, in that the active part (A) of each cable covers one lane while the neutral part (B-E) covers the other lanes between the active part and the zone without road traffic in which the data processing device is arranged, and in that the connection system between the coaxial piezoelectric cable (cables) and the data processing device (110) is also installed in said zone without road traffic.
